# EUROPEAN PATENT APPLICATION

(11) **EP 4 589 891 A1**
(43) Date of publication of application: **23.07.2025**
(21) Application number: 22958409.9
(22) Date of filing: 14.09.2022
(51) Int. Cl.: H04L 27/00

(54) **METHOD AND APPARATUS FOR TRANSMITTING CONFIGURATION INFORMATION, AND READABLE STORAGE MEDIUM**

(71) Applicant: Beijing Xiaomi Mobile Software Co., Ltd., Beijing 100085 (CN)
(72) Inventor: HU, Ziquan, Beijing 100085 (CN); TAO, Xuhua, Beijing 100085 (CN)
(74) Representative: Dehns Germany Partnerschaft mbB
(86) International application number: PCT/CN2022/118839
(87) International publication number: WO 2024/055216

(57) **Abstract**

The present disclosure provides a method and apparatus for transmitting configuration information, and a readable storage medium. The method comprises: receiving first configuration information sent by a network device, the first configuration information comprising a measurement configuration; and according to the first configuration information, performing layer 3 measurement of a first secondary cell; and according to a layer 3 measurement result or whether a user equipment supports a first capability, determining whether to perform layer 1 measurement in a first secondary cell activation process. **In** the method of the present disclosure, the user equipment performs layer 3 measurement according to the first configuration information, and the step of layer 1 measurement is selectively omitted on the basis of the own capability or the layer 3 measurement result, thereby saving a measurement delay in a secondary cell activation process, and saving a secondary cell activation delay.

## Description

### TECHNICAL FIELD

The present disclosure relates to the wireless communication technology, and in particular, to a method and apparatus for transmitting configuration information and a readable storage medium.

### BACKGROUND

In the related art, in communication systems based on technologies such as Carrier Aggregation (CA) or Dual Connectivity (DC), the user equipment can support simultaneous access to multiple cells. For the secondary cell accessed by the user equipment, the activation delay of the secondary cell (SCell) is defined in the 3rd Generation Partner Project (3GPP) standard.

The activation of the secondary cell includes the activation of a known secondary cell and the activation of an unknown secondary cell. Before the secondary cell is activated, if the user equipment has reported the measurement information of the secondary cell to the network device within a period of time specified in the protocol, and the secondary cell is detectable within the cell identification time specified in the protocol, the secondary cell is considered to be a known secondary cell. In addition, for the secondary cell in Frequency Range2 (FR2), that is, in the millimeter wave band, the Transmission Configuration Indicator (TCI) activation in the activation procedure of the secondary cell is determined based on the index value (index) of the synchronization block (Synchronization Signal/PBCH block, SSB) reported by the user equipment or the index of the Channel State Information-Reference Signal (CSI-RS), then the secondary cell is considered to be a known secondary cell. When the above conditions are not met, the secondary cell is considered to be an unknown secondary cell.

When performing the activation of the secondary cell based on SSB, SSB measurement is limited by SSB Measurement Timing Configuration (SMTC), and the cycle time of the SMTC is relatively long, generally 20ms, 40ms or 80ms. Especially for the activation of the FR2 unknown secondary cell (unknown SCell), the user equipment also needs to perform receiving beam sweeping (RX beam sweeping) to determine the preferred beam, which results in a long activation delay of the FR2 unknown secondary cell.

### SUMMARY

The present disclosure provides a method and apparatus for transmitting configuration information, and a readable storage medium.

In a first aspect, the present disclosure provides a method for receiving configuration information, performed by a user equipment. The method includes:
receiving first configuration information sent by a network device, where the first configuration information includes a measurement configuration;
performing a layer 3 measurement of a first secondary cell according to the first configuration information; and
determining whether to perform a layer 1 measurement in an activation procedure of the first secondary cell according to a layer 3 measurement result or whether the user equipment supports a first capability.

In the method of the present disclosure, the user equipment performs the layer 3 measurement according to the first configuration information, and then selectively omits the step of the layer 1 measurement in combination with its own capability or the layer 3 measurement result, thereby saving the measurement delay in the activation procedure of the secondary cell, which is helpful to save the activation delay of the secondary cell.

In some possible implementations, determining whether to perform the layer 1 measurement in the activation procedure of the first secondary cell according to the layer 3 measurement result includes:
in response to any layer 3 signal quality parameter in the layer 3 measurement result being greater than or equal to a set threshold, not performing the layer 1 measurement of the first secondary cell.

In some possible implementations, the set threshold is defined by a protocol, or the set threshold is configured by the network device.

In some possible implementations, determining whether to perform the layer 1 measurement of the first secondary cell according to whether the user equipment supports the first capability includes:
in response to the user equipment supporting the first capability, reporting a first measurement report to the network device based on the layer 3 measurement result without performing the layer 1 measurement of the first secondary cell.

In some possible implementations, the method further includes:
receiving second configuration information sent by the network device, where the second configuration information is used to configure a channel state information reference signal (CSI-RS) resource, the CSI-RS resource has a quasi co-location (QCL) relationship with a reference signal of a first beam, and the first beam is a preferred beam determined by the network device based on the first measurement report;
reporting CSI to the network device according to the second configuration information.

In some possible implementations, determining whether to perform the layer 1 measurement of the first secondary cell according to whether the user equipment supports the first capability includes:
in response to the user equipment not supporting the first capability, reporting a first measurement report to the network device based on the layer 3 measurement result;
receiving third configuration information sent by the network device, where the third configuration information includes a reference signal resource configuration;
performing the layer 1 measurement of the first secondary cell according to the third configuration information.

In some possible implementations, the method further includes:
reporting a second measurement report to the network device based on the layer 1 measurement result.

In some possible implementations, the method further includes:
receiving fourth configuration information sent by the network device, where the fourth configuration information is used to configure a CSI-RS resource, the CSI-RS resource has a QCL relationship with a reference signal of a second beam, and the second beam is a preferred beam determined by the network device based on the second measurement report;
reporting CSI to the network device according to the fourth configuration information.

In some possible implementations, the method further includes:
sending capability information to the network device, where the capability information includes whether the user equipment supports the first capability.

In a second aspect, the present disclosure provides a method for sending configuration information, which is performed by a network device. The method includes:
sending first configuration information to a user equipment, where the first configuration information includes a measurement configuration;
receiving a first measurement report sent by the user equipment, where the first measurement report includes a layer 3 measurement result; and
determining a first beam according to the first measurement report.

In some possible implementations, the method further includes:
receiving capability information sent by the user equipment, where the capability information includes whether the user equipment supports the first capability;
sending corresponding configuration information to the user equipment according to the capability information.

In some possible implementations, sending the corresponding configuration information to the user equipment according to the capability information includes:
in response to the user equipment supporting the first capability, sending second configuration information to the user equipment, where the second configuration information is used to configure a CSI-RS resource, and the CSI-RS resource has a QCL relationship with a reference signal of the first beam.

In some possible implementations, sending the configuration information to the user equipment according to the capability information includes:
in response to the user equipment not supporting the first capability, sending third configuration information to the user equipment, where the third configuration information includes a reference signal resource configuration;
receiving a second measurement report sent by the user equipment, where the second measurement report includes a layer 1 measurement result;
determining a second beam corresponding to a preferred measurement result in the second measurement report; and
sending fourth configuration information to the user equipment, where the fourth configuration information is used to configure a CSI-RS resource, and the CSI-RS resource has a QCL relationship with a reference signal of a second beam.

In a third aspect, the present disclosure provides an apparatus for receiving configuration information, which may be used to perform the steps performed by the user equipment in the above-mentioned first aspect or any possible design of the first aspect. The user equipment can implement each function in the above methods through a hardware structure, a software module, or a hardware structure plus a software module.

When the apparatus shown in the third aspect is implemented through a software module, the apparatus may include a transceiver module and a processing module coupled to each other, where the transceiver module may be used to support the communication apparatus to communicate, and the processing module may be used by the communication apparatus to perform processing operations, such as generating information/message needing to be sent, or processing the received signal to obtain the information/message.

When performing the steps described in the first aspect, the transceiver module is configured to receive first configuration information sent by the network device, where the first configuration information includes a measurement configuration.

The processing module is configured to perform a layer 3 measurement of a first secondary cell according to the first configuration information; and
the processing module is further configured to determine whether to perform a layer 1 measurement in an activation procedure of the first secondary cell according to a layer 3 measurement result or whether the user equipment supports a first capability.

In a fourth aspect, the present disclosure provides an apparatus for sending configuration information, which may be used to perform the steps performed by the network device in the above-mentioned second aspect or any possible design of the second aspect. The network device can implement each function in the above methods through a hardware structure, a software module, or a hardware structure plus a software module.

When the apparatus shown in the fourth aspect is implemented through a software module, the apparatus may include a transceiver module and a processing module coupled to each other, where the transceiver module may be used to support the communication apparatus to communicate, and the processing module may be used by the communication apparatus to perform processing operations, such as generating information/message needing to be sent, or processing the received signal to obtain the information/message.

When performing the steps described in the second aspect, the transceiver module is configured to send first configuration information to the user equipment, where the first configuration information includes a measurement configuration.

The transceiver module is further configured to receive a first measurement report sent by the user equipment, where the first measurement report includes a layer 3 measurement result.

The processing module is configured to determine a first beam according to the first measurement report.

In a fifth aspect, the present disclosure provides a communication apparatus, including a processor and a memory; the memory is configured to store a computer program; and the processor is configured to execute the computer program to implement the first aspect or any possible design of the first aspect.

In a sixth aspect, the present disclosure provides a communication apparatus, including a processor and a memory; the memory is configured to store a computer program; and the processor is configured to execute the computer program to implement the second aspect or any possible design of the second aspects.

In a seventh aspect, the present disclosure provides a computer-readable storage medium, in which instructions (or computer programs, programs) are stored. When the instructions (or computer programs, programs) are called and executed on a computer, the computer is caused to execute the above-mentioned first aspect and any possible design of the first aspect.

In an eighth aspect, the present disclosure provides a computer-readable storage medium in which instructions (or computer programs, programs) are stored. When the instructions (or computer programs, programs) are called and executed on a computer, the computer is caused to execute the above-mentioned second aspect or any possible design of the second aspect.

It should be understood that the foregoing general description and the following detailed description are exemplary and explanatory only, and do not limit the present disclosure.

### BRIEF DESCRIPTION OF THE DRAWINGS

The drawings described here are used to provide a further understanding of the embodiments of the present disclosure and constitute a part of the present application. The schematic embodiments of the embodiments of the present disclosure and their descriptions are used to explain the embodiments of the present disclosure and do not constitute an undue limitation on the embodiments of the present disclosure. In the drawings:

The accompanying drawings, which are incorporated in and constitute a part of this specification, illustrate embodiments consistent with the embodiments of the present disclosure and together with the description, serve to explain principles of the embodiments of the present disclosure.
FIG. 1 is a schematic diagram of an architecture of a wireless communication system provided by an embodiment of the present disclosure;
FIG. 2 is a flowchart of a method for activating an unknown secondary cell according to an exemplary embodiment;
FIG. 3 is a flowchart of a method for activating a known secondary cell according to an exemplary embodiment;
FIG. 4 is a flowchart of a method for transmitting configuration information according to an exemplary embodiment;
FIG. 5 is a schematic diagram of a receiving beam of a user equipment and a transmitting beam of a network device according to an example embodiment;
FIG. 6 is a flowchart of a method for receiving configuration information according to an exemplary embodiment;
FIG. 7 is a flowchart of another method for receiving configuration information according to an exemplary embodiment;
FIG. 8 is a flowchart of another method for receiving configuration information according to an exemplary embodiment;
FIG. 9 is a flowchart of a method for sending configuration information according to an exemplary embodiment;
FIG. 10 is a flowchart of an activation procedure of the secondary cell according to another exemplary embodiment;
FIG. 11 is a flowchart of an activation procedure of the secondary cell according to another exemplary embodiment;
FIG. 12 is a flowchart of an activation procedure of the secondary cell according to another exemplary embodiment;
FIG. 13 is a block diagram of an apparatus for receiving configuration information according to an exemplary embodiment;
FIG. 14 is a block diagram of a user equipment according to an exemplary embodiment;
FIG. 15 is a block diagram of an apparatus for sending configuration information according to an exemplary embodiment;
FIG. 16 is a block diagram of a communication apparatus according to an exemplary embodiment.

### DETAILED DESCRIPTION

The embodiments of the present disclosure will now be further described with reference to the accompanying drawings and specific implementations.

Exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with the embodiments of the present disclosure. Rather, they are merely examples of apparatus and method consistent with some aspects of the present disclosure as detailed in the appended claims.

The terms used in the embodiments of the present disclosure are for the purpose of describing specific embodiments only and are not intended to limit the embodiments of the present disclosure. As used in the embodiments and the appended claims of the present disclosure, the singular forms "a/an", and "the/said" are intended to include the plural forms as well, unless the context clearly dictates otherwise. It should also be understood that the term "and/or" as used herein refers to and includes any and all possible combinations of one or more of the associated listed items.

It should be understood that although the terms first, second, third, etc. may be used to describe various information in the embodiments of the present disclosure, the information should not be limited to these terms. These terms are only used to distinguish information of the same type from each other. For example, without departing from the scope of the embodiments of the present disclosure, the first information may also be called second information, and similarly, the second information may also be called first information. Depending on the context, the words "if" and "in case" as used herein may be interpreted as "when" or "upon" or "in response to determining."

The embodiments of the present disclosure are described in detail below, examples of which are illustrated in the accompanying drawings. The same or similar reference numerals refer to the same or similar elements throughout. The embodiments described below with reference to the accompanying drawings are exemplary and intended to explain the present disclosure and are not to be construed as limitations of the present disclosure.

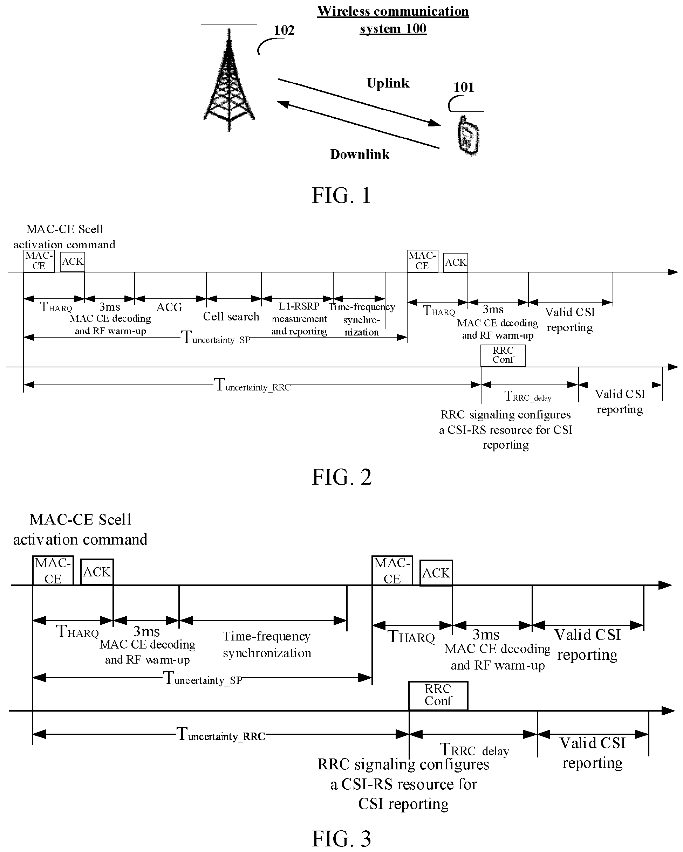

As shown in FIG. 1, a method for transmitting configuration information provided by an embodiment of the present disclosure can be applied to a wireless communication system 100. The wireless communication system may include a user equipment 101 and a network device 102. The user equipment 101 is configured to support carrier aggregation and can be connected to multiple carrier units of the network device 102, including one primary carrier unit and one or more secondary carrier units.

It should be understood that the above wireless communication system 100 can be applied to both low-frequency scenarios and high-frequency scenarios. The application scenarios of the wireless communication system 100 include but are not limited to the long term evolution (LTE) system, the LTE frequency division duplex (FDD) system, the LTE time division duplex (TDD) system, the worldwide interoperability for micro wave access (WiMAX) communication system, the cloud radio access network (CRAN) system, the future fifth generation (5th-Generation, 5G) system, the new wireless (NR) communication system or future evolved public land mobile network (PLMN) system, etc.

The user equipment 101 shown above may be a terminal, an access terminal, a terminal unit, a terminal station, a mobile station (MS), a remote station, a remote terminal, a mobile terminal, a wireless communication device, a terminal agent or a terminal device, etc. The user equipment 101 may be equipped with a wireless transceiver function, which can communicate (such as wirelessly communicate) with one or more network devices of one or more communication systems, and accept the network services provided by the network devices. The network devices here include but are not limited to the shown network device 102.

The user equipment (UE) 101 may be a cellular phone, a cordless phone, a session initiation protocol (SIP) phone, a wireless local loop (WLL) station, a personal digital assistant (PDA) device, a handheld device with a wireless communication function, a computing device or other processing device(s) connected to a wireless modem, a vehicle-mounted device, a wearable device, a terminal device in future 5G networks or a terminal device in future evolved PLMN networks, etc.

The network device 102 may be an access network device (or access network site). The access network device refers to a device that provides a network access function, such as a wireless access network (RAN) base station and so on. The network device 102 may specifically include a base station (BS), or a base station and a wireless resource management device for controlling the base station, etc. The network device 102 may also include a relay station (a relay device), an access point, and a base station in future 5G networks, a base station in future evolved PLMN networks, or an NR base station, etc. The network device 102 may be a wearable device or a vehicle-mounted device. The network device 102 may also be a communication chip having a communication module.

For example, the network device 102 includes but is not limited to: the next generation base station (gnodeB, gNB) in 5G, the evolved node B (eNB) in the LTE system, the radio network controller (RNC), the Node B (NB) in the WCDMA system, the wireless controller under the CRAN system, the base station controller (BSC), the base transceiver station (BTS) in the GSM system or CDMA system, the home base station (for example, the home evolved nodeB, or home node B, HNB), the baseband unit (BBU), the transmission point (transmitting and receiving point, TRP), the transmitting point (TP) or the mobile switching center, etc.

The activation procedure for an unknown secondary cell is different from the activation procedure for a known secondary cell.

As shown in FIG. 2, when activating an unknown secondary cell, after receiving an activation command for activating the secondary cell, the user equipment needs to perform automatic gain control (AGC), cell search (synchronization), L1-RSRP measurement and reporting, time-frequency fine synchronization (fine time/frequency tracking) and CSI reporting. Among them, the activation command may use Media Access Control Control Element (MAC CE) signaling. During the cell search procedure, the user equipment may perform a layer 3 beam-level measurement.

As shown in FIG. 3, when activating a known secondary cell, after receiving an activation command for activating the secondary cell, the user equipment only needs to perform time-frequency synchronization and CSI reporting.

In the procedure of unknown secondary cell, the user equipment needs to perform receiving beam sweeping (RX beam sweeping) to perform Layer 1 (L1) measurement to determine the preferred beam. The beam sweeping needs to sweep 8 directions. The measurement delay of L1 measurement of FR2 unknown secondary cell is long, resulting in a long activation delay.

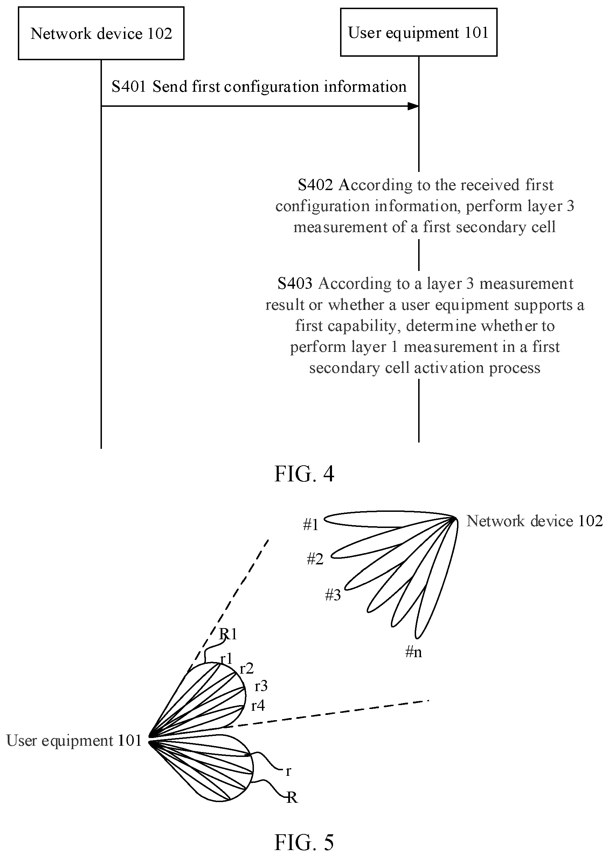

The embodiments of the present disclosure provide a method for transmitting configuration information, which method may be applied in scenarios where the unknown secondary cell is activated. FIG. 4 is a flowchart of a method for transmitting configuration information according to an exemplary embodiment. As shown in FIG. 4, the method includes steps S401 to S403, which are specifically as follows.

In step S401, the network device 102 sends first configuration information to the user equipment, where the first configuration information includes a measurement configuration.

In some possible implementations, the network device 102 sends a Radio Resource Control (RRC) signaling to the user equipment 101, and the RRC signaling carries the first configuration information.

In some possible implementations, the first configuration information sent by the network device 102 is applied to layer 3 (Layer 3, L3) measurement.

In step S402, the user equipment 101 performs a layer 3 measurement of the first secondary cell according to the received first configuration information.

In some possible implementations, when the method of this embodiment is applied to the activation procedure of the unknown secondary cell, the first secondary cell may be the corresponding secondary cell in the activation command issued by the network device 102.

In some possible implementations, the L3 measurement may be a measurement containing beam information, such as a wide-beam measurement based on SSB, that is, the user equipment 101 performs L3 beam-level measurement based on SSB within one beam range through beam forming. As shown in FIG. 5, the wide beam R or the beam range may contain multiple independent receiving beams r.

In an example, as shown in FIG. 5, under FR2, the user equipment 101 uses 8 receiving beams to cover a total range of 120°. The 8 receiving beams are represented by r1, r2,..., r7, r8, and each receiving beam covers a range of 15°. The wide beam R or beam range may contain a range of 3 to 4 receiving beams r.

In step S403, it is determined whether to perform a layer 1 measurement in the activation procedure of the first secondary cell according to the layer 3 measurement result or whether the user equipment supports a first capability.

In some possible implementations, the L3 measurement result corresponds to the wide beam R or beam range of the user equipment 101.

In some possible implementations, the user equipment 101 may determine whether to perform L1 measurement in the activation procedure of the first secondary cell according to whether the L3 measurement result is greater than or equal to a set threshold.

In an example, in at least one L3 measurement result, if any L3 measurement result is greater than or equal to the set threshold, it indicates that the signal quality corresponding to the wide beam is good enough at this time, and the UE may not perform L1 measurement. The wide beam corresponding to the L3 beam-level measurement result that is greater than or equal to the set threshold is regarded as the preferred receiving beam. Therefore, the L1 measurement step can be saved and the measurement delay can be effectively reduced.

In an example, if all L3 measurement results are less than the set threshold, although L1 measurement needs to be performed, combined with the instruction or configuration of the network device 102, the user equipment 101 can only perform L1 measurement in the wide beam corresponding to the preferred L3 measurement result, that is, sweeping only a few beams r within the wide beam R for L1 measurement, which can still reduce the measurement delay.

In some possible implementations, the first capability is used to represent that the L3 measurement result of the user equipment 101 can support the network device 102 in selecting the preferred beam. That is, when the user equipment 101 supports the first capability, it indicates that the user equipment 101 has a strong capability and its L3 measurement result is sufficient to support the network device 102 in beam selection.

In some possible implementations, the user equipment 101 may determine whether L1 measurement needs to be performed according to whether it supports the first capability.

In an example, if the user equipment 101 supports the first capability, the L1 measurement does not need to be performed, and the wide beam corresponding to the preferred L3 measurement result is used as the preferred receiving beam. Therefore, the L1 measurement step can be saved, and the measurement delay can be effectively reduced.

In an example, if the user equipment 101 does not support the first capability, the L1 measurement needs to be performed. Combined with the instruction or configuration of the network device 102, the user equipment 101 can only perform the L1 measurement within the wide beam corresponding to the preferred L3 measurement result, that is, only sweeping a few beams r within the wide beam R to perform the L1 measurement, which can still reduce the measurement delay.

In the embodiments of the present disclosure, the user equipment 101 performs layer 3 measurement according to the first configuration information, and then combines its own capability or the layer 3 measurement result to selectively omit the step of layer 1 measurement, or only perform layer 1 measurement within the wide beam range, thereby effectively saving the measurement delay in the activation procedure of the secondary cell, and conducive to saving the activation delay of the secondary cell.

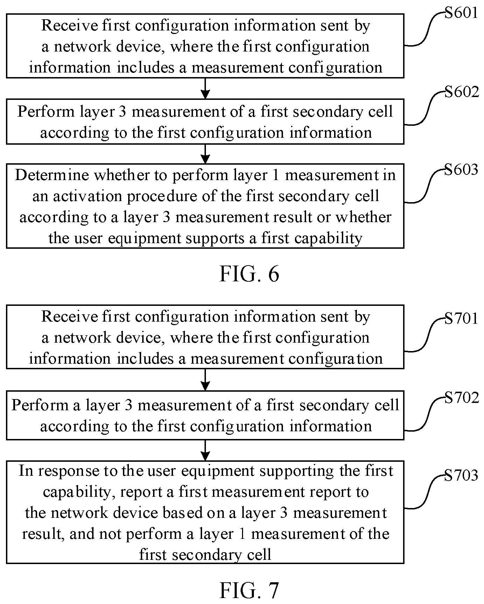

The embodiments of the present disclosure provide a method for receiving configuration information, which is performed by the user equipment 101. FIG. 6 is a flowchart of a method for receiving configuration information according to an exemplary embodiment. As shown in FIG. 6, the method includes steps S601 to S603, which are specifically as follows.

In step S601, the user equipment 101 receives first configuration information sent by the network device 102, where the first configuration information includes a measurement configuration.

In some possible implementations, the first configuration information delivered by the network device 102 is applied to Layer 3 (Layer 3, L3) measurement.

In step S602, the user equipment 101 performs layer 3 measurement of the first secondary cell according to the first configuration information.

In some possible implementations, when the method of this embodiment is applied to the activation procedure of an unknown secondary cell, the first secondary cell may be the corresponding secondary cell in the activation command issued by the network device 102.

In some possible implementations, the L3 measurement may be a measurement containing beam information, such as a wide beam measurement based on SSB, that is, the user equipment 101 performs L3 measurement based on SSB within one beam range through beam forming.

In some possible implementations, the L3 measurement includes: SSB-based L3 Reference Signal Received Power (L3-RSRP) measurement, L3 Reference Signal Received Quality (L3-RSRQ) measurement, or L3 Signal to Interference plus Noise Ratio (L3-SINR) measurement.

In step S603, the user equipment 101 determines whether to perform layer 1 measurement in the activation procedure of the first secondary cell according to the layer 3 measurement result or whether the user equipment 101 supports the first capability.

In some possible implementations, the user equipment 101 may determine whether to perform L1 measurement in the activation procedure of the first secondary cell according to whether the L3 measurement result is greater than or equal to a set threshold.

In some possible implementations, the first capability is used to represent that the L3 measurement result of the user equipment 101 can support the network device 102 in selecting the preferred beam. That is, when the user equipment 101 supports the first capability, it indicates that the user equipment 101 has a strong capability and its L3 measurement result is sufficient to support the network device 102 in beam selection.

In some possible implementations, the user equipment 101 may determine whether the L1 measurement needs to be performed according to whether it supports the first capability.

In the embodiments of the present disclosure, the user equipment 101 performs layer 3 measurement according to the first configuration information, and then combines its own capability or the layer 3 measurement result to selectively omit the layer 1 measurement step, thereby saving the measurement delay in the activation procedure of the secondary cell, which is helpful to save the activation delay of the secondary cell.

The embodiments of the present disclosure provide a method for receiving configuration information, which is performed by the user equipment 101. The method includes steps S601 to S603', which are specifically as follows.

In step S601, the user equipment 101 receives first configuration information sent by the network device 102, where the first configuration information includes a measurement configuration.

In step S602, the user equipment 101 performs a layer 3 measurement of the first secondary cell according to the first configuration information.

In step S603', in response to any layer 3 signal quality parameter in the layer 3 measurement result being greater than or equal to a set threshold, no layer 1 measurement of the first secondary cell is performed.

In some possible implementations, the L3 measurement result may be L3-RSRP, L3-RSRQ or L3-SINR obtained by the measurement using different wide beams. The layer 3 signal quality parameter may refer to L3-RSRP, L3-RSRQ or L3-SINR.

In some possible implementations, the set threshold may include a threshold corresponding to L3-RSRP, a threshold corresponding to L3-RSRQ, or a threshold corresponding to L3-SINR.

In an example, the explanations are given by taking the L3 measurement result as L3-RSRP for an example. Combined with the example corresponding to FIG. 5, if the user equipment 101 obtains 2 to 3 L3-RSRP values, the user equipment 101 can determine the relationship between the 2 to 3 L3-RSRP values and the corresponding thresholds. It is determined whether there is an L3-RSRP greater than or equal to the corresponding set threshold.

In this example, when any L3-RSRP exists in the L3 measurement result, it indicates that the signal quality corresponding to the wide beam is good enough at this time, and the UE does not need to perform the layer 1 measurement. The wide beam corresponding to the L3 measurement result is used as the preferred receiving beam. Therefore, the L1 measurement step can be saved, and the measurement delay can be effectively reduced.

In an example, if all L3 measurement results are less than the set threshold, the user equipment 101 can still report an L3 measurement report to the network device 102. Combined with the instruction or configuration of the network device 102, the L1 measurement is performed within the wide beam corresponding to the preferred L3 measurement result, that is, only a few beams r within the wide beam R are swept for the L1 measurement, which can still reduce the measurement delay.

In some possible implementations, the L1 measurement may be a measurement using different beams r to obtain L1-RSRP, L1-RSRQ or L1-SINR.

In some possible implementations, the set threshold is defined by a protocol, or the set threshold is configured by the network device 102.

In an example, if the set threshold is configured by the network device 102, the network device 102 may configure the first configuration information and the set threshold in the same signaling.

In the embodiments of the present disclosure, after performing L3 measurement, the user equipment 101 can determine whether it is necessary to perform L1 measurement in combination with the set threshold defined by the protocol or configured by the network device 102, thereby reducing the measurement delay.

The embodiments of the present disclosure provide a method for receiving configuration information, which is performed by the user equipment 101. The method includes steps S601 to S603", which are specifically as follows.

In step S601, the user equipment 101 receives first configuration information sent by the network device 102, where the first configuration information includes a measurement configuration.

In step S602, the user equipment 101 performs a layer 3 measurement of the first secondary cell according to the first configuration information.

In step S603", it is determined whether to perform a layer 1 measurement of the first secondary cell according to whether the user equipment 101 supports a first capability.

In some possible implementations, the first capability is used to represent that the L3 measurement result of the user equipment 101 can support the network device 102 in selecting the preferred beam. That is, when the user equipment 101 supports the first capability, it indicates that the user equipment 101 has a strong capability and its L3 measurement result is sufficient to support the network device 102 in beam selection.

In an example, if the user equipment 101 supports the first capability, the L1 measurement does not need to be performed, and the wide beam corresponding to the preferred L3 measurement result is used as the preferred receiving beam. Therefore, the L1 measurement step can be saved, and the measurement delay can be effectively reduced.

In an example, if the user equipment 101 does not support the first capability, the L1 measurement needs to be performed. Combined with the instruction or configuration of the network device 102, the user equipment 101 can only perform the L1 measurement within the wide beam corresponding to the preferred L3 measurement result, that is, only a few beams r within the wide beam R are swept to perform the L1 measurement, which can still reduce the measurement delay.

In the embodiment of the present disclosure, after performing the L3 measurement, the user equipment 101 can determine whether the L1 measurement needs to be performed in combination with its own capability, thereby reducing the measurement delay.

The embodiments of the present disclosure provide a method for receiving configuration information, which is performed by the user equipment 101. The method includes steps S600 to S603", which are specifically as follows.

In step S600, the user equipment 101 sends capability information to the network device 102. The capability information includes whether the user equipment 101 supports the first capability.

In step S601, the user equipment 101 receives the first configuration information sent by the network device 102, where the first configuration information includes a measurement configuration.

In step S602, the user equipment 101 performs a layer 3 measurement of the first secondary cell according to the first configuration information.

In step S603", it is determined whether to perform a layer 1 measurement of the first secondary cell according to whether the user equipment 101 supports the first capability.

In the embodiments of the present disclosure, in the scenario of determining whether to perform the L1 measurement in combination with the capability of the user equipment 101, the user equipment 101 may first report the capability information to the network device 102, that is, perform step S600 before steps S601 to S603", so as to facilitate the network device 102 to learn the capability of the user equipment 101 in a timely manner, thereby delivering the configuration information appropriately.

The embodiments of the present disclosure provide a method for receiving configuration information, which is performed by the user equipment 101. FIG. 7 is a flowchart of a method for receiving configuration information according to an exemplary embodiment. The method includes steps S701 to S703, which are specifically as follows.

In step S701, the user equipment 101 receives the first configuration information sent by the network device 102, where the first configuration information includes a measurement configuration.

In step S702, the user equipment 101 performs a layer 3 measurement of the first secondary cell according to the first configuration information.

In step S703, in response to the user equipment 101 supporting the first capability, a first measurement report is reported to the network device 102 based on a layer 3 measurement result, without performing a layer 1 measurement of the first secondary cell.

In some possible implementations, the first measurement report, that is, the L3 measurement report, contains all L3 measurement results in the L3 measurement procedure performed by the user equipment 101 based on SSB.

In some possible implementations, after receiving the first measurement report, the network device 102 may combine each L3 measurement result to determine the preferred L3 measurement result.

In the embodiments of the present disclosure, the user equipment 101 that supports the first capability does not need to perform the L1 measurement, but only performs the L3 measurement, and reports the first measurement report corresponding to the L3 measurement, so that the network device 102 determines the preferred beam.

The embodiments of the present disclosure provide a method for receiving configuration information, which is performed by the user equipment 101. The method includes steps S701 to S704, which are specifically as follows.

In step S701, the user equipment 101 receives first configuration information sent by the network device 102, where the first configuration information includes a measurement configuration.

In step S702, the user equipment 101 performs layer 3 measurement of the first secondary cell according to the first configuration information.

In step S703, in response to the user equipment 101 supporting the first capability, a first measurement report is reported to the network device 102 based on the layer 3 measurement result, without performing layer 1 measurement of the first secondary cell.

In step S704, the user equipment 101 receives second configuration information sent by the network device 102. The second configuration information is used to configure a channel state information reference signal (CSI-RS) resource. The CSI-RS resource has a quasi co-location (QCL) relationship with a reference signal of a first beam, and the first beam is the preferred beam determined by the network device 102 based on the first measurement report.

In some possible implementations, the network device 102 may send the second configuration information by sending RRC signaling.

In some possible implementations, the network device 102 determines the preferred L3 measurement result after receiving the first measurement report, and can obtain the wide beam R on the UE side represented by the preferred L3 measurement result according to the preferred L3 measurement result. After determining the wide beam R, the network device 102 may determine its own transmitting beam that best corresponds to the wide beam, that is, the first beam.

In an example, as shown in FIG. 5, if the wide beam on the UE side represented by the preferred L3 measurement result is R1, the network device 102 can determine the first beam #2 that best corresponds to the wide beam.

In some possible implementations, the CSI-RS resource configured in the second configuration information has a Quasi Co-Location (QCL) relationship with the first beam, and the user equipment 101 can learn the information of the first beam and the time-frequency resource of CSI-RS based on the second configuration information. Therefore, the user equipment 101 can use the wide beam corresponding to the first beam to receive CSI-RS and perform CSI-RS measurement.

In step S705, the user equipment 101 reports CSI to the network device 102 according to the second configuration information.

In some possible implementations, the user equipment 101 uses the preferred receiving beam in step S704, such as the preferred wide beam, to perform CSI-RS measurement, and performs CSI reporting according to the measurement result.

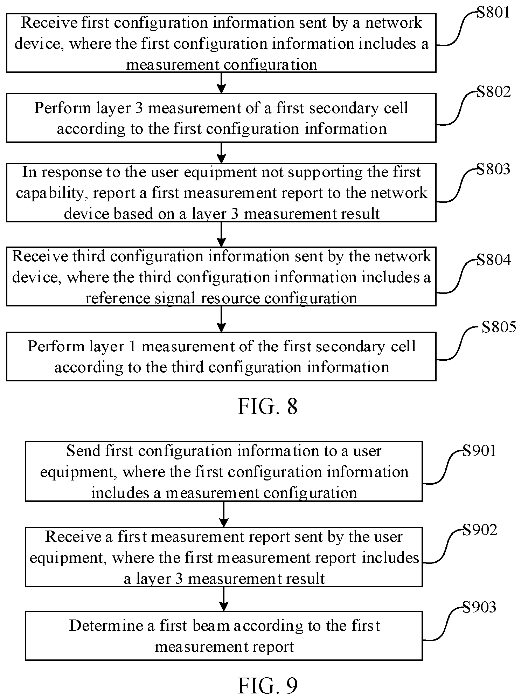

The embodiments of the present disclosure provide a method for receiving configuration information, which is performed by the user equipment 101. FIG. 8 is a flowchart of a method for receiving configuration information according to an exemplary embodiment. The method includes steps S801 to S805, which are specifically as follows.

In step S801, the user equipment 101 receives first configuration information sent by the network device 102. The first configuration information includes a measurement configuration.

In step S802, the user equipment 101 performs layer 3 measurement of the first secondary cell according to the first configuration information.

In step S803, in response to the user equipment 101 not supporting the first capability, a first measurement report is reported to the network device 102 based on the layer 3 measurement result.

In some possible implementations, the first measurement report, that is, the L3 measurement report, contains all L3 measurement results in the L3 measurement procedure performed by the user equipment 101 based on SSB.

In some possible implementations, after receiving the first measurement report, the network device 102 may combine each L3 measurement result to determine the preferred L3 measurement result.

In step S804, the user equipment 101 receives third configuration information sent by the network device 102. The third configuration information includes a reference signal resource configuration.

In some possible implementations, the third configuration information may be applied to the L1 measurement within a range of the wide beam R corresponding to the preferred L3 measurement result.

In some possible implementations, the third configuration information may include an SSB resource configuration or a CSI-RS resource configuration.

In step S805, the user equipment 101 performs layer 1 measurement of the first secondary cell according to the third configuration information.

In some possible implementations, the user equipment 101 performs L1 measurement of the first secondary cell within the range of the wide beam R corresponding to the preferred L3 measurement result according to the third configuration information.

In some possible implementations, when the third configuration information includes the SSB resource configuration, the user equipment 101 performs L1-RSRP, L1-RSRQ or L1-SINR measurement based on SSB. When the third configuration information includes the CSI-RS resource configuration, the user equipment 101 performs L1-RSRP, L1-RSRQ or L1-SINR measurement based on CSI-RS.

In an example:
as shown in FIG. 5, after receiving the first measurement report, the network device 102 can combine each L3 measurement result to determine the preferred L3 measurement result. The preferred L3 measurement result corresponds to the wide beam R of the UE. According to the third configuration information, the UE uses individual beams r1 to r4 within the wide beam R to measure the L1-RSRP of the corresponding reference signal.

The present disclosure provides a method for receiving configuration information, which is performed by the user equipment 101. The method includes steps S801 to S806, which are specifically as follows.

In step S801, the user equipment 101 receives first configuration information sent by the network device 102, where the first configuration information includes a measurement configuration.

In step S802, the user equipment 101 performs layer 3 measurement of the first secondary cell according to the first configuration information.

In step S803, in response to the user equipment 101 not supporting the first capability, a first measurement report is reported to the network device 102 based on the layer 3 measurement result.

In step S804, the user equipment 101 receives third configuration information sent by the network device 102. The third configuration information includes a reference signal resource configuration.

In step S805, the user equipment 101 performs layer 1 measurement of the first secondary cell according to the third configuration information.

In step S806, the user equipment 101 reports a second measurement report to the network device based on the layer 1 measurement result.

In some possible implementations, the second measurement report includes the L1 measurement result corresponding to each beam r within the range of the wide beam R, for example, including the L1-RSRP of the reference signals corresponding to r1 to r4 within the wide beam R.

The embodiments of the present disclosure provide a method for receiving configuration information, which is performed by the user equipment 101. The method includes steps S801 to S808, which are specifically as follows.

In step S801, the user equipment 101 receives first configuration information sent by the network device 102, where the first configuration information includes a measurement configuration.

In step S802, the user equipment 101 performs layer 3 measurement of the first secondary cell according to the first configuration information.

In step S803, in response to the user equipment 101 not supporting the first capability, a first measurement report is reported to the network device 102 based on the layer 3 measurement result.

In step S804, the user equipment 101 receives third configuration information sent by the network device 102. The third configuration information includes a reference signal resource configuration.

In step S805, the user equipment 101 performs layer 1 measurement of the first secondary cell according to the third configuration information.

In step S806, the user equipment 101 reports a second measurement report to the network device based on the layer 1 measurement result.

In step S807, the user equipment 101 receives fourth configuration information sent by the network device 102. The fourth configuration information is used to configure a CSI-RS resource. The CSI-RS resource has a QCL relationship with a reference signal of a second beam. The second beam is the preferred beam determined by the network device 102 based on the second measurement report.

In some possible implementations, the network device 102 may determine the preferred L1-RSRP according to the second measurement report, and further determines that the transmitting beam corresponding to the preferred L1-RSRP is the second beam.

In some possible implementations, the CSI-RS resource configured in the fourth configuration information has a QCL relationship with the second beam, and the user equipment 101 can obtain the information of the second beam and the time-frequency resource of the CSI-RS based on the fourth configuration information. Therefore, the user equipment 101 can use the preferred receiving beam corresponding to the second beam to receive CSI-RS and perform CSI-RS measurement.

In step S808, the user equipment 101 reports the CSI to the network device 102 according to the fourth configuration information.

In some possible implementations, the user equipment 101 uses the preferred receiving beam in step S807 to perform CSI-RS measurement, and performs CSI reporting based on the measurement result. At this time, the preferred receiving beam is one of the independent beams r1 to r4 within the range of the wide beam R1, for example, r2.

The embodiments of the present disclosure provide a method for sending configuration information, which is performed by the network device 102. FIG. 9 is a flowchart of a method for sending configuration information according to an exemplary embodiment. The method includes steps S901 to S903, which are specifically as follows.

In step S901, the network device 102 sends first configuration information to the user equipment 101, where the first configuration information includes a measurement configuration.

In some possible implementations, the network device 102 sends RRC signaling to the user equipment 101, and the RRC signaling carries the first configuration information.

In some possible implementations, the first configuration information delivered by the network device 102 is applied to Layer 3 (Layer 3, L3) measurement.

In step S902, the network device 102 receives a first measurement report sent by the user equipment 101, where the first measurement report includes a layer 3 measurement result.

In some possible implementations, after performing L3 measurement based on the first configuration information, the user equipment 101 may generate a first measurement report including the L3 measurement result.

In step S903, the network device 102 determines the first beam according to the first measurement report.

In some possible implementations, the network device 102 may determine the wide beam of the UE represented by the preferred L3 measurement result based on the first measurement report, and determine the transmitting beam with the best corresponding effect to the wide beam among its own transmitting beams as the first beam.

In the embodiments of the present disclosure, the network device 102 first configures the measurement configuration for L3 measurement for the user equipment 101, so that the user equipment 101 can first perform L3 measurement of the first secondary cell, to combine the L3 measurement result or the capability of the user equipment 101 to determine whether L1 measurement needs to be performed, which is helpful to save the measurement delay, thereby saving the activation delay of the secondary cell.

In some possible implementations, this embodiment can be applied in a scenario where it is determined whether to perform L1 measurement based on a set threshold, or in a scenario where it is determined whether to perform L1 measurement based on whether the user equipment 101 supports the first capability.

In some possible implementations, in a scenario where it is determined whether to perform L1 measurement according to the set threshold, the network device 102 may configure the corresponding CSI-RS resource for the user equipment 101 after determining the first beam, and the CSI-RS resource has a QCL relationship with the first beam. In this way, the user equipment 101 uses a wide beam corresponding to the preferred L3 measurement result according to the CSI-RS resource to measure CSI-RS and report the CSI.

In some possible implementations, in a scenario where it is determined whether to perform L1 measurement based on whether the user equipment 101 supports the first capability, the method may also include the following steps S904 to S905, which are specifically as follows.

In step S904, the network device 102 receives capability information sent by the user equipment 101. The capability information includes whether the user equipment supports the first capability.

In some possible implementations, the first capability is used to represent that the L3 measurement result of the user equipment 101 can support the network device 102 in selecting the preferred beam. That is, when the user equipment 101 supports the first capability, it indicates that the user equipment 101 has a strong capability and its L3 measurement result is sufficient to support the network device 102 in beam selection.

It may be understood that the execution order of step S904 is not limited in this embodiment. For example, it may also be executed before step S901.

In step S905, the network device 102 sends corresponding configuration information to the user equipment 101 according to the capability information.

In some possible implementations, combined with different capabilities of the user equipment 101, the network device 102 can deliver different configuration information, such as second configuration information or third configuration information, to the user equipment 101 according to the L3 beam-level measurement result, to indicate whether the user equipment 101 needs to perform L1 measurement.

The embodiments of the present disclosure provide a method for sending configuration information, which is performed by the network device 102. The method includes steps S901 to S905-11, which are specifically as follows.

In step S901, the network device 102 sends first configuration information to the user equipment 101, where the first configuration information includes a measurement configuration.

In step S902, the network device 102 receives a first measurement report sent by the user equipment 101, where the first measurement report includes a layer 3 measurement result.

In step S903, the network device 102 determines a first beam according to the first measurement report.

In step S904, the network device 102 receives capability information sent by the user equipment 101. The capability information includes whether the user equipment supports first capability.

In step S905-11, in response to the user equipment 101 supporting the first capability, second configuration information is sent to the user equipment 101. The second configuration information is used to configure a CSI-RS resource. The CSI-RS resource has a QCL relationship with a reference signal of the first beam.

In this embodiment, the execution order of step S904 is not limited. For example, it may also be executed before step S901.

In some possible implementations, when the user equipment 101 supports the first capability, the network device 102 may determine the preferred L3 measurement result according to its first measurement report. According to the preferred L3 measurement result, the wide beam R on the UE side as well as the first beam among its own transmitting beams that best corresponds to the wide beam can be known. The network device 102 configures the CSI-RS resource that has a QCL relationship with the first beam for the UE.

In some possible implementations, the user equipment 101 may obtain the information of the first beam and the time-frequency resource of the CSI-RS based on the second configuration information. The wide beam corresponding to the first beam can be used to receive CSI-RS, perform CSI-RS measurement, and report CSI.

The embodiments of the present disclosure provide a method for sending configuration information, which is performed by the network device 102. The method includes steps S901 to S905-24, which are specifically as follows.

In step S901, the network device 102 sends first configuration information to the user equipment 101, where the first configuration information includes a measurement configuration.

In step S902, the network device 102 receives a first measurement report sent by the user equipment 101, where the first measurement report includes a layer 3 measurement result.

In step S903, the network device 102 determines a first beam according to the first measurement report.

In step S904, the network device 102 receives capability information sent by the user equipment 101. The capability information includes whether the user equipment supports a first capability.

In step S905-21, in response to the user equipment 101 not supporting the first capability, the network device 102 sends third configuration information to the user equipment 101, where the third configuration information includes a reference signal resource configuration.

In some possible implementations, the third configuration information may be applied to the L1 measurement within the range of the wide beam R corresponding to the preferred L3 measurement result.

In some possible implementations, the third configuration information may include an SSB resource configuration or a CSI-RS resource configuration.

In step S905-22, the network device 102 receives a second measurement report sent by the user equipment 101, where the second measurement report includes a layer 1 measurement result.

In some possible implementations, the second measurement report includes the L1 measurement result corresponding to each beam r within the range of the wide beam R. For example, as shown in FIG. 5, the second measurement report includes the L1-RSRP of the reference signal corresponding to r1~r4 within the wide beam R.

In step S905-23, the network device 102 determines a second beam corresponding to a preferred measurement result in the second measurement report.

In some possible implementations, the network device 102 determines that a transmitting beam corresponding to the preferred L1-RSRP is the second beam.

In step S905-24, the network device 102 sends fourth configuration information to the user equipment 101. The fourth configuration information is used to configure a CSI-RS resource, and the CSI-RS resource has a QCL relationship with a reference signal of a second beam.

In some possible implementations, the CSI-RS resource configured in the fourth configuration information has a QCL relationship with the second beam, and the user equipment 101 may obtain the information of the second beam and the time-frequency resource of the CSI-RS based on the fourth configuration information. The user equipment 101 may use the preferred receiving beam corresponding to the second beam to receive CSI-RS, perform CSI-RS measurement and CSI reporting.

To facilitate understanding of the application of the embodiments of the present disclosure in the activation procedure of the unknown secondary cell, several specific examples are listed below.

### First example:

This example is intended to illustrate the activation procedure of the unknown secondary cell of the user equipment 101 that supports the first capability.

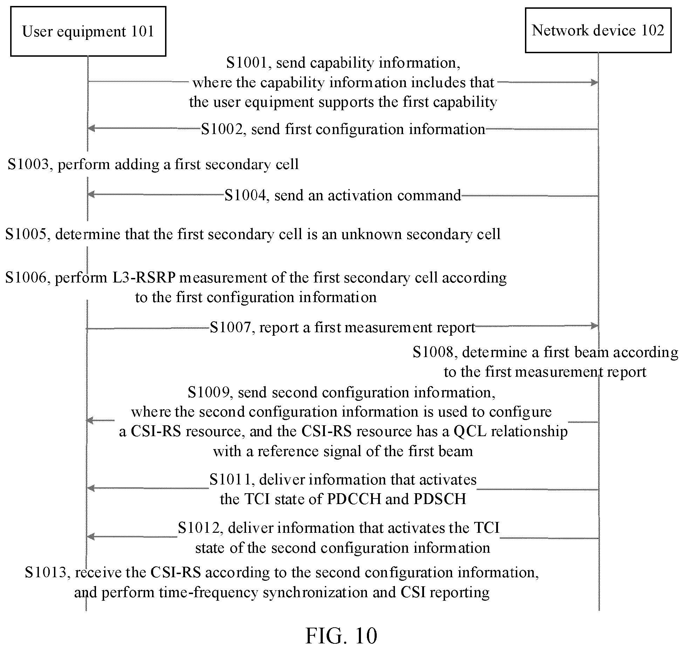

FIG. 10 is a flowchart of an activation procedure of the secondary cell according to an exemplary embodiment of the present disclosure. As shown in FIG. 10, the activation procedure includes steps S1001 to S1013, which are specifically as follows.

In step S1001, the user equipment 101 sends capability information to the network device 102. The capability information includes that the user equipment 101 supports the first capability.

In step S1002, the network device 102 sends first configuration information to the user equipment 101 according to the received capability information, and sends an RRC message to the user equipment 101. The RRC message is used to indicate the addition of the deactivated secondary cell (deactivated SCell), that is, the first secondary cell.

In step S1003, the user equipment 101 performs adding the first secondary cell according to the RRC message.

In step S1004, the network device 102 sends an activation command to the user equipment 101. The activation command may be MAC CE signaling. The activation command is used to activate the first secondary cell.

In step S1005, the user equipment 101 determines that the first secondary cell is an unknown secondary cell to the UE.

In some possible implementations, when any of the following conditions is not met, the UE determines that the first secondary cell is an unknown secondary cell:
when the user equipment has reported the measurement information of the secondary cell to the network within the set time period (agreed by the protocol) before receiving the command for activating the secondary cell, and when the secondary cell is detectable within a cell identification time stipulated in the protocol.

For the secondary cell in FR2, it is additionally required that the TCI activation in the activation procedure of the secondary cell is determined based on the SSB or CSI-RS index reported by the user equipment.

In step S1006, the user equipment 101 performs L3-RSRP measurement of the first secondary cell based on the SSB according to the first configuration information.

In step S1007, the user equipment 101 reports a first measurement report to the network device 102. The first measurement report includes all L3-RSRPs in the L3 measurement procedure performed by the user equipment 101 based on SSB. As shown in FIG. 5, each L3-RSRP corresponds to one wide beam on the UE side.

In step S1008, the network device 102 determines the first beam (preferred beam) on the network side according to the first measurement report. The first beam is the transmitting beam corresponding to the preferred L3-RSRP. For example, the first beam is #2, and the wide beam corresponding to the preferred L3-RSRP is R1.

After step S1008, step S1009 or S1009' is executed.

In step S1009, the network device 102 sends second configuration information to the user equipment 101. The second configuration information is used to configure a CSI-RS resource. The CSI-RS resource has a QCL relationship with a reference signal of the first beam.

In step S1009', the network device 102 configures a tracking reference signal (TRS) for the user equipment 101, and configures the TCI so that the TRS has a QCL relationship with the first beam.

In some possible implementations, the TRS is used for activating the first secondary cell, and the network device 102 may configure the TRS by sending an RRC message.

Step S1011 is executed after step S1009, and step S1010 is executed after step S1009'.

In step S1010, when TRS is configured, the network device 102 delivers information that activates the TCI state corresponding to the TRS.

In step S1011, the network device 102 delivers information that activates the TCI state of the physical downlink control channel (PDCCH) and the physical downlink shared channel (PDSCH).

In step S1012, the network device 102 delivers information that activates the TCI state of the second configuration information, that is, the CSI-RS resource.

In some possible implementations, the network device can send the activation messages of steps S1009 to S1011 through the same MAC CE, to save transmission delay and network signaling.

In some possible implementations, after receiving the information for activating the TCI state of the TRS sent by the network device 102, the user equipment 101 can activate the first secondary cell according to the TRS. After receiving information for activating the TCI state of the CSI-RS resource, the CSI may be reported. After receiving the information for activating the TCI state of the PDCCH and the PDSCH, the corresponding physical downlink channel can be received after activating the first secondary cell.

In some possible implementations, the TCI state of the PDCCH and PDSCH may be the same as the TCI state of the CSI-RS resource or the TCI state of the TRS.

In some possible implementations, activating the unknown secondary cell through TRS can enhance the activation effect of the secondary cell and shorten the activation delay of the secondary cell.

In step S1013, the user equipment 101 receives the CSI-RS according to the second configuration information, and performs subsequent steps of activation: time-frequency synchronization and CSI reporting.

In some possible implementations, the user equipment 101 receives CSI-RS using a wide beam corresponding to the preferred L3-RSRP.

Alternatively, the following step S1013' can be performed when configuring TRS.

In step S1013', the user equipment 101 receives the TRS, and performs time-frequency synchronization and CSI reporting based on the TRS.

In this example, for the user equipment 101 that supports the first capability, during the activation procedure of the secondary cell, the user equipment 101 only needs to perform L3-RSRP measurement and saves the L1 measurement procedure, thereby effectively reducing the measurement delay and then reducing the activation procedure of the secondary cell, and achieving rapid activation of the secondary cell.

### Second example:

This example is intended to illustrate the activation procedure of the unknown secondary cell for the user equipment 101 that does not support the first capability.

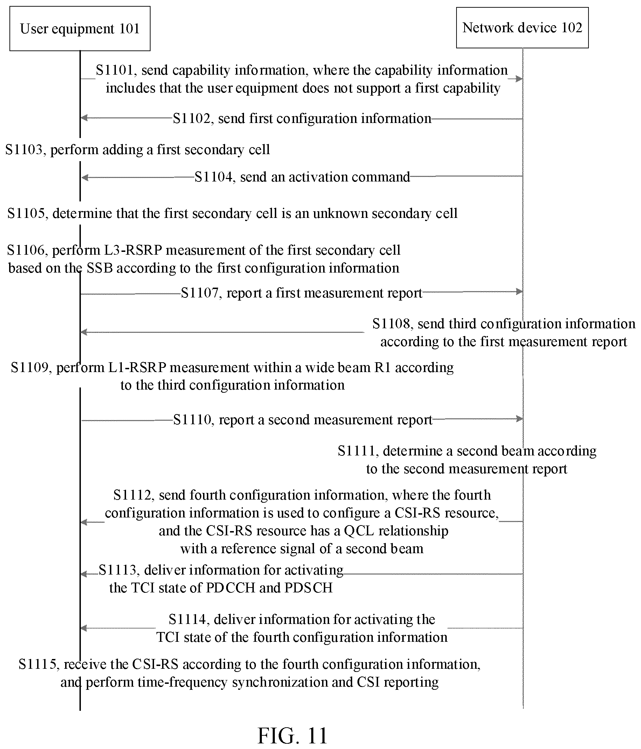

FIG. 11 is a flowchart of an activation procedure of the secondary cell according to an exemplary embodiment of the present disclosure. As shown in FIG. 11, the activation procedure includes steps S1101 to S1115, which are specifically as follows.

In step S1101, the user equipment 101 sends capability information to the network device 102. The capability information includes that the user equipment 101 does not support the first capability.

In step S1102, the network device 102 sends first configuration information to the user equipment 101 according to the received capability information, and sends an RRC message to the user equipment 101. The RRC message is used to indicate the addition of the deactivated secondary cell (deactivated SCell), that is, the first secondary cell.

In step S1103, the user equipment 101 performs adding the first secondary cell according to the RRC message.

In step S1104, the network device 102 sends an activation command to the user device 101.

In step S1105, the user equipment 101 determines that the first secondary cell is an unknown secondary cell to the UE.

In step S1106, the user equipment 101 performs L3-RSRP measurement of the first secondary cell based on the SSB according to the first configuration information.

In step S1107, the user equipment 101 reports a first measurement report to the network device 102. The first measurement report includes all L3-RSRPs in the L3 measurement procedure performed by the user equipment 101 based on SSB. In combination with FIG. 5, each L3-RSRP corresponds to one wide beam on the UE side.

In step S1108, according to the first measurement report, the network device 102 determines the wide beam R1 corresponding to the preferred L3-RSRP on the UE side and delivers third configuration information. The third configuration information includes a reference signal (CSI-RS/SSB) resource configuration, and the third configuration information is used to instruct the UE to perform L1 measurement.

In step S1109, the user equipment 101 performs L1-RSRP measurement within the range of the wide beam R1 according to the third configuration information. This step performs receiving beam sweeping within the range of the wide beam R1 to perform L1-RSRP measurement of CSI-RS/SSB.

It can be understood that, in combination with FIG. 5, when receiving beam sweeping is performed within the range of the wide beam R1, compared with the method of sweeping 8 beams in the related art, the delay can be effectively reduced, which can further be reflected in reduction of the terminal receiving beam sweeping coefficient, such as reducing from 8 to 6 or 4, etc.

In step S1110, the user equipment 101 reports a second measurement report to the network device 102 based on the L1-RSRP.

In step S1111, the network device 102 determines a second beam (preferred beam) corresponding to the preferred L1-RSRP in the second measurement report.

For example, the second beam is #3, and the beam on the UE side corresponding to the preferred L1-RSRP is r2 in R1.

In step S1112, the network device 102 sends fourth configuration information to the user equipment 101. The fourth configuration information is used to configure a CSI-RS resource. The CSI-RS resource has a QCL relationship with the reference signal of the second beam.

In some possible implementations, the network device 102 may send an RRC message, where the RRC message includes the fourth configuration information.

In step S1113, the network device 102 delivers information for activating the TCI state of the PDCCH and PDSCH.

In step S1114, the network device 102 delivers information for activating the TCI state of the fourth configuration information, that is, the CSI-RS resource.

In some possible implementations, the network device may send the activation message of steps S1112 to S1113 through the same MAC CE to save the transmission delay and network signaling.

In step S1115, the user equipment 101 receives the CSI-RS according to the fourth configuration information, and performs subsequent steps of activation: time-frequency synchronization and CSI reporting.

In some possible implementations, the user equipment 101 receives the CSI-RS by using the beam corresponding to the preferred L1-RSRP.

In this example, for the user equipment 101 that does not support the first capability, during the activation procedure of the secondary cell, according to the third configuration information of the network device 102, the user equipment 101 performs L1-RSRP measurement within one wide beam range, which can effectively save the measurement delay, thereby reducing the activation delay of the secondary cell and realizing rapid activation of the secondary cell.

### Third example:

This example is intended to illustrate the activation procedure of the unknown secondary cell of the user equipment 101 in the scenario where the L3 measurement result is greater than or equal to the set threshold.

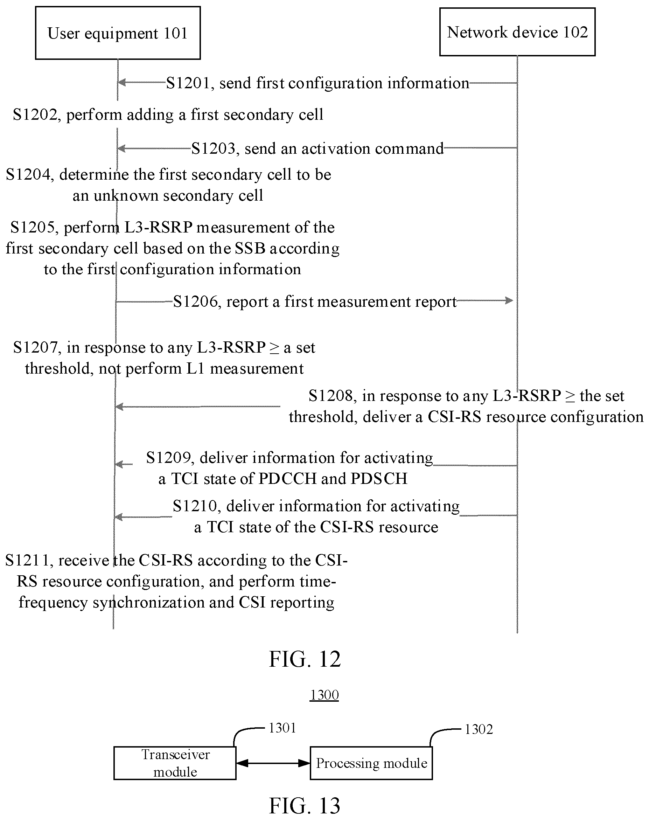

FIG. 12 is a flowchart of an activation procedure of the secondary cell according to an exemplary embodiment of the present disclosure. As shown in FIG. 12, the activation procedure includes steps S1201 to S1211, which are specifically as follows.

In step S1201, the network device 102 sends first configuration information to the user equipment 101, and sends an RRC message to the user equipment 101. The RRC message is used to indicate the addition of the deactivated secondary cell (deactivated SCell), that is, the addition of the first secondary cell.

In step S1202, the user equipment 101 performs adding the first secondary cell according to the RRC message.

In step S1203, the network device 102 sends an activation command to the user equipment 101. The activation command may be MAC CE signaling. The activation command is used to activate the first secondary cell.

In step S1204, the user equipment 101 determines that the first secondary cell is an unknown secondary cell to the UE.

In step S1205, the user equipment 101 performs L3-RSRP measurement of the first secondary cell based on the SSB according to the first configuration information.

In step S1206, the user equipment 101 reports a first measurement report to the network device 102.

In step S1207, in response to any L3-RSRP in the first measurement report being greater than or equal to a set threshold, the user equipment 101 does not perform L1 measurement of the first secondary cell. The first L3-RSRP may be the preferred L3-RSRP.

In step S1208, in response to any L3-RSRP in the first measurement report being greater than or equal to the set threshold, the network device 102 delivers a CSI-RS resource configuration. The CSI-RS resource configuration may be second configuration information, and the CSI-RS resource in the configuration has a QCL relationship with the transmitting beam (e.g., the first beam) corresponding to the first L3-RSRP.

In step S1209, the network device 102 delivers information for activating the TCI state of the PDCCH and PDSCH.

In step S1210, the network device 102 delivers information for activating the TCI state of the CSI-RS resource in step S1207.

In step S1211, the user equipment 101 receives the CSI-RS according to the CSI-RS resource configuration, and performs subsequent steps of activation: time-frequency synchronization and CSI reporting.

In some possible implementations, the user equipment 101 receives the CSI-RS by using a wide beam corresponding to the first L3-RSRP.

In this example, in the scenario where L3-RSRP is greater than or equal to the set threshold, during the activation procedure of the secondary cell, the user equipment 101 only needs to perform L3-RSRP measurement, which saves the L1 measurement procedure, thereby effectively reducing the measurement delay, and then reducing the activation delay of the secondary cell and achieving rapid activation of the secondary cell.

Based on the same concept as the above method embodiments, the embodiments of the present disclosure also provide an apparatus for receiving configuration information. The apparatus may have the functions of the user equipment 101 in the above method embodiments, and may be used to perform the steps performed by the user equipment 101 provided by the above method embodiments. The functions can be implemented by hardware, or can be implemented by software or hardware executing corresponding software. The hardware or software includes one or more modules corresponding to the above functions.

In a possible implementation, the communication apparatus 1300 shown in FIG. 13 can serve as the user equipment 101 involved in the above method embodiments, and perform the steps performed by the user equipment 101 in the above method embodiments. As shown in FIG. 13, the communication apparatus 1300 may include a transceiver module 1301 and a processing module 1302 coupled to each other. The transceiver module 1301 may be used to support the communication apparatus to communicate. The transceiver module 1301 may have a wireless communication function, for example, it can communicate wirelessly with other communication apparatus(es) through a wireless air interface. The processing module 1302 can be used by the communication apparatus to perform the processing operation, such as generating information/messages that need to be sent, or processing received signals to obtain information/messages.

When performing the steps implemented by the user equipment 101, the transceiver module 1301 is configured to receive the first configuration information sent by the network device, where the first configuration information includes the measurement configuration.

The processing module 1302 is configured to perform layer 3 measurement of the first secondary cell according to the first configuration information;
the processing module 1302 is further configured to determine whether to perform layer 1 measurement in the activation procedure of the first secondary cell according to the layer 3 measurement result or whether the user equipment supports a first capability.

In some possible implementations, the processing module 1302 is further configured to, in response to any layer 3 signal quality parameter in the layer 3 measurement result being greater than or equal to the set threshold, not perform layer 1 measurement of the first secondary cell.

In some possible implementations, the set threshold is defined by a protocol, or the set threshold is configured by a network device.

In some possible implementations, the processing module 1302 is further configured to, in response to the user equipment supporting the first capability, report a first measurement report to the network device based on the layer 3 measurement result, and not perform layer 1 measurement of the first secondary cell.

In some possible implementations, the transceiver module 1301 is further configured to receive second configuration information sent by the network device. The second configuration information is used to configure a channel state information reference signal (CSI-RS) resource. The CSI-RS resource has a quasi co-location (QCL) relationship with the reference signal of the first beam, and the first beam is the preferred beam determined by the network device based on the first measurement report;
the transceiver module 1301 is further configured to report the CSI to the network device according to the second configuration information.

In some possible implementations, the transceiver module 1301 is further configured to, in response to the user equipment not supporting the first capability, report a first measurement report to the network device based on the layer 3 measurement result;
the transceiver module 1301 is further configured to receive third configuration information sent by the network device, where the third configuration information includes a reference signal resource configuration;
the processing module 1302 is further configured to perform layer 1 measurement of the first secondary cell according to the third configuration information.

In some possible implementations, the transceiver module 1301 is further configured to report a second measurement report to the network device based on the layer 1 measurement result.

In some possible implementations, the transceiver module 1301 is further configured to receive fourth configuration information sent by the network device. The fourth configuration information is used to configure a CSI-RS resource. The CSI-RS resource has a QCL relationship with the reference signal of the second beam, the second beam is the preferred beam determined by the network device based on the second measurement report;
the transceiver module 1301 is further configured to report the CSI to the network device according to the fourth configuration information.

In some possible implementations, the transceiver module 1301 is further configured to send capability information to the network device, where the capability information includes whether the user equipment supports the first capability.

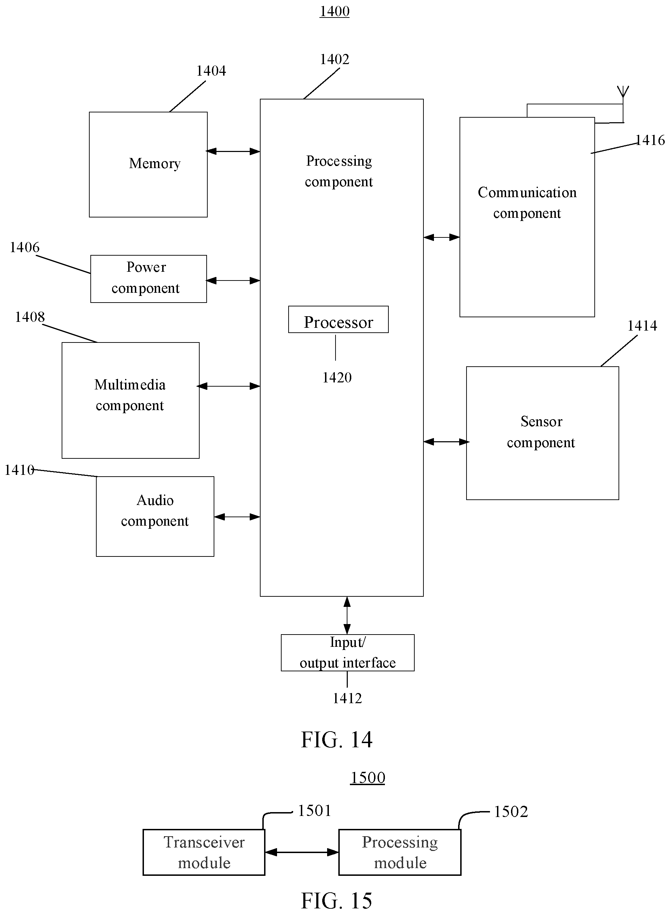

When the communication apparatus is the user equipment 101, its structure may also be as shown in FIG. 14. Referring to FIG. 14, the apparatus 1400 may include one or more of the following components: a processing component 1402, a memory 1404, a power component 1406, a multimedia component 1408, an audio component 1410, an input/output (I/O) interface 1412, a sensor component 1414, and a communication component 1416.

The processing component 1402 generally controls the overall operations of an apparatus 1400, such as the operations associated with display, telephone calls, data communications, camera operations, and recording operations. The processing component 1402 may include one or more processors 1420 to execute instructions to complete all or part of the steps of the above methods. Moreover, the processing component 1402 may include one or more modules which facilitate interaction between the processing component 1402 and other components. For example, the processing component 1402 may include a multimedia module to facilitate the interaction between the multimedia component 1408 and the processing component 1402.

The memory 1404 is configured to store various types of data to support the operations at the apparatus 1400. Examples of such data include instructions for any application or method operated on the apparatus 1400, contact data, phonebook data, messages, pictures, videos, etc. The memory 1404 may be implemented by any type of volatile or non-volatile storage devices, or a combination thereof, such as a static random access memory (SRAM), an electrically erasable programmable read-only memory (EEPROM), an erasable programmable read-only memory (EEPROM), a programmable read-only memory (EPROM), a programmable read-only memory (PROM), a read-only memory (ROM), a magnetic memory, a flash memory, a magnetic or optical disk.

The power component 1406 provides power to various components of the apparatus 1400. The power component 1406 may include a power management system, one or more power sources, and other components associated with the generation, management, and distribution of power to the apparatus 1400.

The multimedia component 1408 includes a screen providing an output interface between the apparatus 1400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or slide action, but also sense a period of time and a pressure associated with the touch or slide action. In some embodiments, the multimedia component 1408 includes a front camera and/or a rear camera. The front camera and/or the rear camera may receive an external multimedia data while the apparatus 1400 is in an operation mode, such as a photographing mode or a video mode. Each of the front camera and the rear camera may be a fixed optical lens system or have focus and optical zoom capability.

The audio component 1410 is configured to output and/or input audio signals. For example, the audio component 1410 includes a microphone (MIC) configured to receive an external audio signal when the apparatus 1000 is in operation mode, such as a call mode, a recording mode, and a voice recognition mode. The received audio signal may be further stored in the memory 1404 or transmitted via the communication component 1416. In some embodiments, the audio component 1410 further includes a speaker for outputting audio signals.

The I/O interface 1412 provides an interface between the processing component 1402 and peripheral interface modules, such as a keyboard, a click wheel, buttons, and the like. The buttons may include, but are not limited to, a home button, a volume button, a starting button, and a locking button.

The sensor component 1414 includes one or more sensors to provide assessments of various aspects of the apparatus 1400. For example, the sensor component 1414 can detect an open/closed status of the apparatus 1400, relative positioning of components, e.g., the display and the keypad, of the apparatus 1400, a change in position of the apparatus 1400 or a component of the apparatus 1400, a presence or absence of user contact with the apparatus 1400, an orientation or an acceleration/deceleration of the apparatus 1400, and a change in temperature of the apparatus 1400. The sensor component 1414 may include a proximity sensor configured to detect the presence of nearby objects without any physical contact. The sensor component 1414 may also include a light sensor, such as a CMOS or CCD image sensor, for use in imaging applications. In some embodiments, the sensor component 1414 may also include an acceleration sensor, a gyroscope sensor, a magnetic sensor, a pressure sensor, or a temperature sensor.

The communication component 1416 is configured to facilitate communication, wired or wirelessly, between the apparatus 1400 and other devices. The apparatus 1400 can access a wireless network based on a communication standard, such as WiFi, 2G or 3G, or a combination thereof. In one exemplary embodiment, the communication component 1416 receives a broadcast signal or broadcast related information from an external broadcast management system via a broadcast channel. In one exemplary embodiment, the communication component 1416 further includes a near field communications (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology and other technologies.

In an exemplary embodiment, the apparatus 1400 may be configured by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, for implementing the above-described methods.

In an exemplary embodiment, a non-transitory computer-readable storage medium including instructions, such as a memory 1404 including instructions, which are executable by the processor 1420 of the apparatus 1400 to complete the above method is also provided. For example, the non-transitory computer-readable storage medium may be a ROM, a random access memory (RAM), a CD-ROM, a magnetic tape, a floppy disk, an optical data storage device, etc.

Based on the same concept as the above method embodiments, the embodiments of the present disclosure also provide an apparatus for sending configuration information. This apparatus may have the functions of the network device 102 in the above method embodiments, and may be used to perform the steps performed by the network device 102 provided by the above method embodiments. This function can be implemented by hardware, or can be implemented by software or hardware executing corresponding software. The hardware or software includes one or more modules corresponding to the above functions.

In a possible implementation, the apparatus 1500 shown in FIG. 15 can serve as the network device 102 involved in the above method embodiments, and perform the steps performed by the network device 102 in the above method embodiments. As shown in FIG. 15, the apparatus 1500 may include a transceiver module 1501 and a processing module 1502 that are coupled to each other. The transceiver module 1301 may be used to support the communication apparatus to communicate. The transceiver module 1501 may have a wireless communication function, such as being able to communicate with other communication apparatus(es) through a wireless air interface. The processing module 1502 may be used by the communication apparatus to perform processing operations, such as generating information/messages that need to be sent, or processing received signals to obtain information/messages.

When performing the steps implemented by the network device 102, the transceiver module 1501 is configured to send first configuration information to the user equipment 101, where the first configuration information includes a measurement configuration.

The transceiver module 1501 is further configured to receive a first measurement report sent by the user equipment, where the first measurement report includes a layer 3 measurement result.

The processing module 1502 is configured to determine the first beam according to the first measurement report.

In some possible implementations, the transceiver module 1501 is further configured to receive capability information sent by the user equipment, where the capability information includes whether the user equipment supports the first capability;
the transceiver module 1501 is further configured to send corresponding configuration information to the user equipment according to the capability information.

In some possible implementations, the transceiver module 1501 is further configured to, in response to the user equipment supporting a first capability, send second configuration information to the user equipment, where the second configuration information is used to configure a CSI-RS resource, and the CSI-RS resource has a QCL relationship with a reference signal of the first beam.

In some possible implementations, the transceiver module 1501 is further configured to, in response to the user equipment not supporting the first capability, send third configuration information to the user equipment, where the third configuration information includes a reference signal resource configuration;
the transceiver module 1501 is further configured to receive a second measurement report sent by the user equipment, where the second measurement report includes the layer 1 measurement result;
the processing module 1502 is further configured to determine a second beam corresponding to a preferred measurement result in the second measurement report;
the transceiver module 1501 is further configured to send fourth configuration information to the user equipment. The fourth configuration information is used to configure a CSI-RS resource, and the CSI-RS resource has a QCL relationship with a reference signal of the second beam.

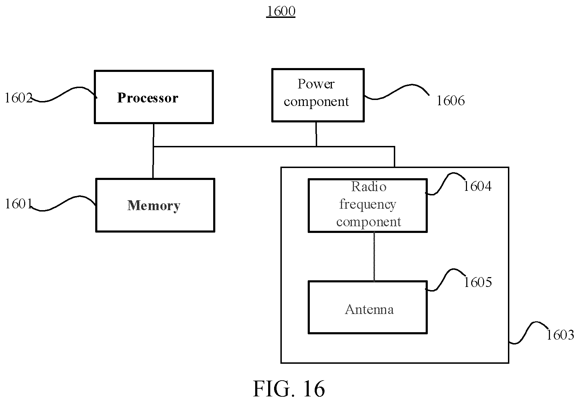

When the communication apparatus is the network device 102, its structure may also be as shown in FIG. 16. Taking a base station as an example to illustrate the structure of a communication apparatus. As shown in FIG. 16, the apparatus 1600 includes a memory 1601, a processor 1602, a transceiver component 1603, and a power component 1606. The memory 1601 is coupled to the processor 1602 and may be used to store programs and data necessary for the communication apparatus 1600 to implement various functions. The processor 1602 is configured to support the communication apparatus 1600 to perform corresponding functions in the above methods, and the functions can be implemented by calling a program stored in the memory 1601. The transceiver component 1603 may be a wireless transceiver, which may be used to support the communication apparatus 1600 to receive signaling and/or data through a wireless air interface, and to send signaling and/or data. The transceiver component 1603 may also be called a transceiver unit or a communication unit. The transceiver component 1603 may include a radio frequency component 1604 and one or more antennas 1605. The radio frequency component 1604 may be a remote radio unit (RRU). Specifically, it may be used for the transmission of radio frequency signals and the conversion of radio frequency signals and baseband signals. The one or more antennas 1605 may be specifically used for radiating and receiving radio frequency signals.

When the communication apparatus 1600 needs to send data, the processor 1602 can perform baseband processing on the data to be sent, and then output the baseband signal to the radio frequency unit. The radio frequency unit performs radio frequency processing on the baseband signal and then sends the radio frequency signal in the form of electromagnetic waves through the antenna. When data is sent to the communication apparatus 1600, the radio frequency unit receives the radio frequency signal through the antenna, converts the radio frequency signal into a baseband signal, and outputs the baseband signal to the processor 1602. The processor 1602 converts the baseband signal into data and processes the data.

Other implementations of the embodiments of the present disclosure will be readily apparent to those skilled in the art, upon consideration of the specification and practice of the contents disclosed herein. The present disclosure is intended to cover any variations, uses, or adaptations of the embodiments of the present disclosure that follow the general principles of the embodiments of the present disclosure and include common general knowledge or habitual technical means in the technical field that is not disclosed in the present disclosure. It is intended that the specification and embodiments be considered as exemplary only, with a true scope and spirit of the embodiments of the present disclosure being indicated by the appending claims.

It is to be understood that the embodiments of the present disclosure are not limited to the precise structures described above and illustrated in the accompanying drawings, and various modifications and changes may be made without departing from the scope thereof. The scope of the embodiments of the present disclosure is limited only by the appended claims.

### Industrial applicability

In the embodiments of the present disclosure, the user equipment performs layer 3 measurement according to the first configuration information, and then combines its own capabilities or layer 3 measurement result to selectively omit the step of layer 1 measurement, or only perform layer 1 measurement within the range of the wide beam, thereby effectively saving the measurement delay in the activation procedure of the secondary cell and conducive to saving the activation delay of the secondary cell.

## Claims

1. A method for receiving configuration information, performed by a user equipment, wherein the method comprises:
receiving first configuration information sent by a network device, wherein the first configuration information comprises a measurement configuration;
performing a layer 3 measurement of a first secondary cell according to the first configuration information; and
determining whether to perform a layer 1 measurement in an activation procedure of the first secondary cell according to a layer 3 measurement result or whether the user equipment supports a first capability.

2. The method according to claim 1, wherein determining whether to perform the layer 1 measurement in the activation procedure of the first secondary cell according to the layer 3 measurement result comprises:
in response to any layer 3 signal quality parameter in the layer 3 measurement result being greater than or equal to a set threshold, not performing the layer 1 measurement of the first secondary cell.

3. The method according to claim 2, wherein the set threshold is defined by a protocol, or the set threshold is configured by the network device.

4. The method according to claim 1, wherein determining whether to perform the layer 1 measurement of the first secondary cell according to whether the user equipment supports the first capability comprises:
in response to the user equipment supporting the first capability, reporting a first measurement report to the network device based on the layer 3 measurement result without performing the layer 1 measurement of the first secondary cell.

5. The method according to claim 4, further comprising:
receiving second configuration information sent by the network device, wherein the second configuration information is used to configure a channel state information reference signal (CSI-RS) resource, the CSI-RS resource has a quasi co-location (QCL) relationship with a reference signal of a first beam, and the first beam is a preferred beam determined by the network device based on the first measurement report; and
reporting CSI to the network device according to the second configuration information.

6. The method according to claim 1, wherein determining whether to perform the layer 1 measurement of the first secondary cell according to whether the user equipment supports the first capability comprises:
in response to the user equipment not supporting the first capability, reporting a first measurement report to the network device based on the layer 3 measurement result;
receiving third configuration information sent by the network device, wherein the third configuration information comprises a reference signal resource configuration; and
performing the layer 1 measurement of the first secondary cell according to the third configuration information.

7. The method according to claim 6, further comprising:
reporting a second measurement report to the network device based on the layer 1 measurement result.

8. The method according to claim 7, further comprising:
receiving fourth configuration information sent by the network device, wherein the fourth configuration information is used to configure a CSI-RS resource, the CSI-RS resource has a QCL relationship with a reference signal of a second beam, and the second beam is a preferred beam determined by the network device based on the second measurement report; and
reporting CSI to the network device according to the fourth configuration information.

9. The method according to any one of claims 1 to 8, further comprising:
sending capability information to the network device, wherein the capability information comprises whether the user equipment supports the first capability.

10. A method for sending configuration information, performed by a network device, wherein the method comprises:
sending first configuration information to a user equipment, wherein the first configuration information comprises a measurement configuration;
receiving a first measurement report sent by the user equipment, wherein the first measurement report comprises a layer 3 measurement result; and
determining a first beam according to the first measurement report.

11. The method according to claim 10, further comprising:
receiving capability information sent by the user equipment, wherein the capability information comprises whether the user equipment supports a first capability; and
sending corresponding configuration information to the user equipment according to the capability information.

12. The method according to claim 11, wherein sending the corresponding configuration information to the user equipment according to the capability information comprises:
in response to the user equipment supporting the first capability, sending second configuration information to the user equipment, wherein the second configuration information is used to configure a CSI-RS resource, and the CSI-RS resource has a QCL relationship with a reference signal of the first beam.

13. The method according to claim 11, wherein sending the corresponding configuration information to the user equipment according to the capability information comprises:
in response to the user equipment not supporting the first capability, sending third configuration information to the user equipment, wherein the third configuration information comprises a reference signal resource configuration;
receiving a second measurement report sent by the user equipment, wherein the second measurement report comprises a layer 1 measurement result;
determining a second beam corresponding to a preferred measurement result in the second measurement report; and
sending fourth configuration information to the user equipment, wherein the fourth configuration information is used to configure a CSI-RS resource, and the CSI-RS resource has a QCL relationship with a reference signal of the second beam.

14. An apparatus for receiving configuration information, configured in a user equipment, wherein the apparatus comprises:
a transceiver module, configured to receive first configuration information sent by a network device, wherein the first configuration information comprises a measurement configuration;
a processing module, configured to perform a layer 3 measurement of a first secondary cell according to the first configuration information; and
the processing module being further configured to determine whether to perform a layer 1 measurement in an activation procedure of the first secondary cell according to a layer 3 measurement result or whether the user equipment supports a first capability.

15. An apparatus for sending configuration information, configured in a network device, wherein the apparatus comprises:
a transceiver module, configured to send first configuration information to a user equipment, wherein the first configuration information comprises a measurement configuration;
the transceiver module being further configured to receive a first measurement report sent by the user equipment, wherein the first measurement report comprises a layer 3 measurement result; and
a processing module, configured to determine a first beam according to the first measurement report.

16. A communication apparatus, comprising a processor and a memory, wherein
the memory is configured to store a computer program; and
the processor is configured to execute the computer program to implement the method according to any one of claims 1-9.

17. A communication apparatus, comprising a processor and a memory, wherein
the memory is configured to store a computer program; and
the processor is configured to execute the computer program to implement the method according to any one of claims 10-13.

18. A computer-readable storage medium in which instructions are stored, wherein when the instructions are called and executed on a computer, the computer is caused to execute the method according to any one of claims 1-9.

19. A computer-readable storage medium in which instructions are stored, wherein when the instructions are called and executed on a computer, the computer is caused to execute the method according to any one of claims 10-13.
